# EUROPEAN PATENT APPLICATION

(11) **EP 3 012 052 A1**
(43) Date of publication of application: **27.04.2016**
(21) Application number: 15191134.4
(22) Date of filing: 22.10.2015
(51) Int. Cl.: B23D 45/10, B23D 59/00, B27B 5/065

(54) **MACHINE FOR CUTTING PANELS OF WOOD OR THE LIKE**

(30) Priority: 22.10.2014 IT BO20140580
(71) Applicant: BIESSE S.p.A., 61100 Pesaro (IT)
(72) Inventor: LATTANZI, Lorenzo, 61100 PESARO (IT)
(74) Representative: Manconi, Stefano

(57) **Abstract**

A machine to cut panels (2) of wood or the like is provided with a support surface (P) for at least one panel (2), at least one cutting member (23, 25) to cut the panel (2), and at least one operating device (21) for moving the cutting member (23, 25) orthogonally to the support surface (P) in response to a signal of a detecting device (36) configured to detect the profile of a larger face (27) of the panel (2) arranged in contact with the support surface (P).

## Description

The present invention relates to a machine to cut panels of wood or the like.

In the field of the cutting of wood panels it is known to provide a machine comprising a base defining a substantially horizontal support surface for at least one wood panel or the like; a cutting station; a cutting unit mounted in the cutting station and mobile in a first direction parallel to the support surface for cutting the panel; and at least one pusher for moving the panel through the cutting station in a second direction parallel to the support surface and transverse to the first direction.

The machine also comprises a pressure device to lock the panel on the support surface and to allow the cutting unit to cut the panel properly.

The cutting unit comprises a carriage, horizontally mobile along a pair of guides parallel to each other and to the first direction, and a vertical slide mounted on the horizontal slide to move in a third direction orthogonal to the support surface.

An incision blade and a cutting blade are mounted on the vertical slide. The blades are moved by the vertical slide in the third direction between a lowered rest position, in which the incision blade and the cutting blade are substantially arranged below the support surface, and a raised operating position, in which the incision blade and the cutting blade protrude above the support surface.

When the incision blade and the cutting blade are moved into their raised operating position, the incision blade incises a lower larger face of the panel in contact with the support surface, while the cutting blade, mounted behind the incision blade in the first direction, cuts the entire thickness of the panel.

The incision blade is configured to incise a trapezoidal incision channel in the lower larger face of the panel, and the thickness of the cutting blade is such that it moves within said incision channel.

At the end of the cutting step, each of the two facing sides of the panel comprises a respective triangular chamfer whose size depends on the relative position between the incision blade and the lower larger face of the panel in the third direction.

When the components formed by cutting the panel are edged, the triangular chamfers are filled with the glue used to glue the finishing edges on the components. Consequently, the triangular chamfers must have a constant shape of a minimum size to ensure an acceptable aesthetic appearance to the edged components.

The aforesaid known machines to cut panels have some drawbacks, mainly deriving from the fact that these machines can realize triangular chamfers of irregular shape.

In fact, since the lower larger face of the panel can be not perfectly flat, the deformations of the base generated by the pressure device can vary the distance between the support surface and the pair of guides of the horizontal carriage, and the guides of the horizontal carriage can be not perfectly parallel to the support surface, the triangular chamfers made by the incision blade may have an irregular and variable shape.

The object of the present invention is to provide a machine to cut wood panels or the like which is free from the aforesaid drawbacks and which is simple and cheap to implement.

According to the present invention, there is provided a machine to cut wood panels or the like as claimed in the appended claims.

The present invention will now be described with reference to the accompanying drawings illustrating a non-limitative embodiment, in which:
Figure 1 is a schematic plan view, with parts removed for clarity's sake, of a preferred embodiment of the machine of the present invention;
Figure 2 is a schematic side view, with parts removed for clarity's sake, of a detail of the machine of Figure 1; and
Figure 3 is a schematic perspective view, with parts removed for clarity's sake, of a detail of Figure 2.

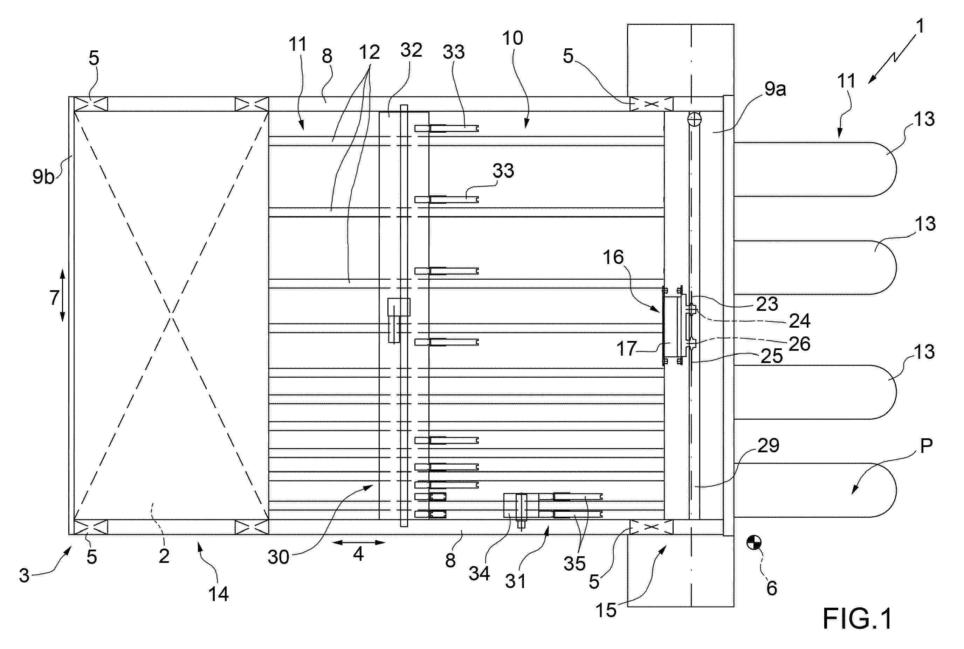

With reference to Figure 1, 1 indicates, as a whole, a machine to cut wood panels 2 or the like (for example panels made of plastic material or partly of wood and partly of plastic material) having a substantially rectangular shape.

The machine 1 comprises a portal frame 3, which is substantially parallelepiped-shaped with a rectangular base, extends in a horizontal direction 4, and is provided with four vertical corners, each defined by a respective upright 5 parallel to a vertical direction 6 transverse to the direction 4.

Each upright 5 is aligned to a corresponding upright 5 in the direction 4 and to a corresponding upright 5 in a horizontal direction 7 perpendicular to the directions 4 and 6.

Each upright 5 is connected to a corresponding upright 5 by a longitudinal guiding member 8 fixed to the upper ends of the two uprights 5 parallel to the direction 4, and is connected to a corresponding upright 5 by a cross member 9 parallel to the direction 7.

The machine 1 further comprises a base 10, which is arranged beneath and inside the frame 3, and comprises two supporting devices 11 arranged on opposite sides of one of the cross members 9 (hereinafter indicated with 9a) in the direction 4.

The two devices 11 define, together with the upper face of the cross member 9a, a substantially horizontal support surface P for the panels 2, and respectively comprise a plurality of roller bars 12 parallel to each other and to the direction 4, and four release tables 13 parallel to each other and to the direction 4.

The bars 12 extend between the cross member 9a and a station 14 for loading the panels 2 on the surface P. The station 14 is formed inside the frame 3 starting from the cross member 9 (hereinafter indicated with 9b) opposite to the cross member 9a, and is configured to receive a stack of panels 2.

The machine 1 further comprises a cutting station 15, which is formed at the cross member 9a, and is provided with a cutting unit 16.

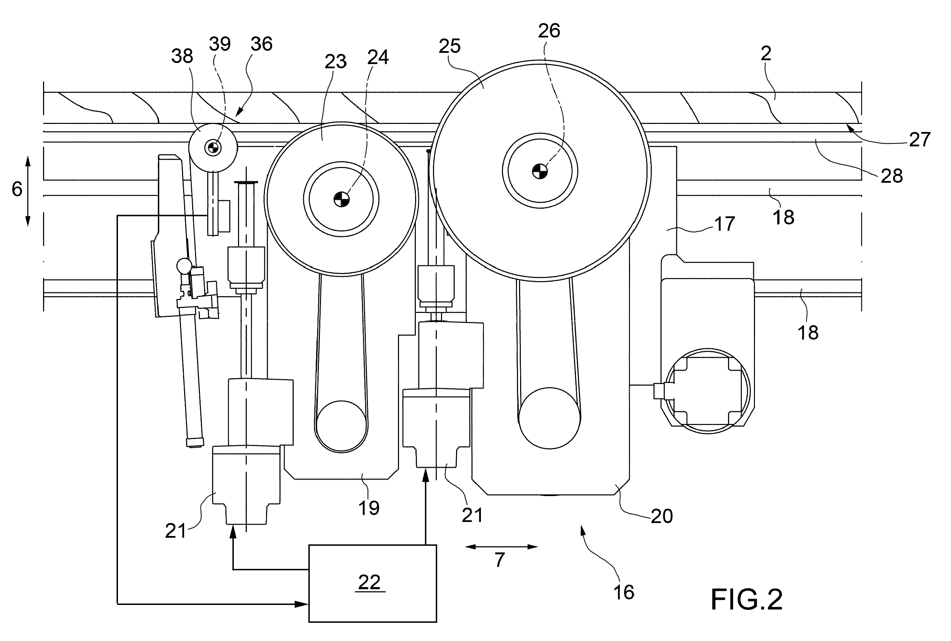

As shown in Figure 2, the unit 16 comprises a horizontal carriage 17 slidingly coupled to a pair of guides 18 formed on the cross member 9a parallel to the direction 7 to perform, with respect to base 10 and under the thrust of a known and not shown operating device, rectilinear movements in the direction 7.

The carriage 17 supports two vertical slides 19, 20 slidingly coupled to the carriage 17 to perform rectilinear movements in the direction 6 with respect to the carriage 17.

The slides 19, 20 are moved in the direction 6 by respectively independent electric motors 21, each of which is mounted on the carriage 17, and is coupled to an electronic control unit 22 of the machine 1.

The cutting unit 16 further comprises an incision blade 23 mounted on the slide 19 to rotate, relative to the slide 19, about a respective longitudinal axis 24 parallel to the direction 4, and a cutting blade 25 mounted on the slide 20 to rotate, relative to the slide 20, about a respective longitudinal axis 26 parallel to the direction 4.

Each blade 23, 25 is moved by its own motor 21 in the direction 6 independently of the other blade 23, 25 between a respective lowered rest position, in which the blade 23, 25 is arranged below the surface P to allow the advancement of the panels 2 along the surface P, and a respective raised operating position, in which the blade 23, 25 protrudes above the surface P to cut the panels 2. Moreover, the blades 23, 25 are moved by the carriage 17 in the direction 7 with a reciprocating rectilinear motion comprising a forward stroke in which the blade 23, arranged in front of the blade 25 in the forward direction 7 of the unit 16, incises a lower larger face 27 of the panel 2 arranged on the surface P and the blade 25 cuts the panels 2, and a return stroke.

When arranged in their raised operating positions, the blades 23, 25 slidingly engage a cutting channel 28 formed in the cross member 9a parallel to the direction 7.

With reference to Figure 1, the unit 16 cooperates with a pressure device 29 of known type, which extends above the surface P in the direction 7, and is mobile, with respect to the frame 3, in the direction 6 between a raised rest position and a lowered operating position, wherein the panels 2 are locked on the surface P and are cut by the unit 16 parallel to the direction 7.

The machine 1 further comprises, in the present case, a main pusher 30 and a secondary pusher 31 to advance the panels 2 along the surface P and through the station 15, either way up the direction 4.

The pusher 30 comprises a motorized carriage 32, which is mounted above the bars 12, extends between the two longitudinal members 8 in the direction 7, and supports a plurality of gripping members 33 distributed along the carriage 32 in the direction 7.

Each member 33 is mobile along the carriage 32 in the direction 7, is further mobile between a raised rest position and a lowered operating position, and comprises, in this case, a lower jaw and an upper jaw, mutually mobile between a clamping position and a release position of at least one panel 2.

The pusher 31 comprises a motorized carriage 34, which is coupled to one of the longitudinal members 8, is mounted above the bars 12, and supports, in this case, a pair of gripping members 35 quite similar to the members 33.

The machine 1 further comprises a detecting device 36 for detecting a profile, in particular curvilinear and/or shaped parts, of the face 27 of the panel 2.

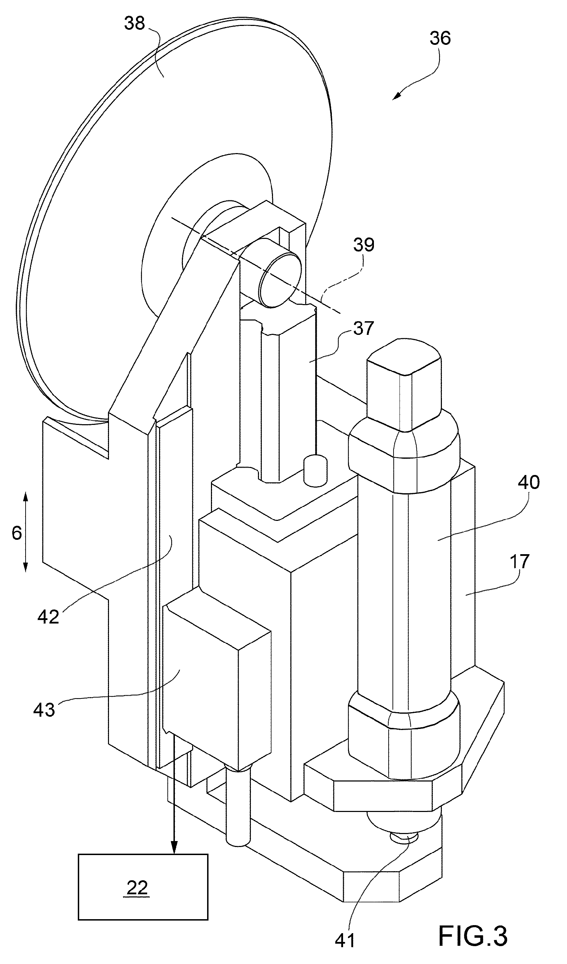

As shown in Figures 2 and 3, the device 36 comprises, in this case, a vertical slide 37 slidingly coupled to the carriage 17 to perform rectilinear movements in the direction 6 with respect to carriage 17.

The slide 37 supports a feeler member defined, in the present case, by a roller 38, which is aligned to the blades 23, 25 in the direction 7 so as to slidingly engage the channel 28, and is rotatably coupled to the slide 37 to rotate, with respect to the slide 37, about a respective longitudinal axis 39 parallel to the direction 4.

A pneumatic cylinder 40, which is fixed to the carriage 17 parallel to the direction 6 and has an output rod 41 fixed to the slide 37, keeps the roller 38 in contact with the face 27.

The device 36 further comprises a magnetic or optical band 42 mounted on the slide 37 parallel to the direction 6 and a magnetic or optical reader 43 mounted on the carriage 17 in a position facing the band 42.

The reader 43 measures the displacements of the roller 38, of the slide 37 and, therefore, of the band 42 in the direction 6 as a function of the profile of the face 27, and is connected to the control unit 22 to enable the control unit 22 to selectively control at least one of the motors 21 and to control the displacement of the incision blade 23 and/or of the cutting blade 25 in the direction 6 as a function of the signal coming from the reader 43.

In other words, the detecting device 36 allows the control unit 22 to selectively move the incision blade 23 and/or the cutting blade 25 in the direction 6 as a function of the profile of the face 27, and therefore allows the blade 23 to perform an incision having a regular and constant shape along the whole width of the face 27 in the direction 7.

According to some variations not shown:
the roller 38 is eliminated and replaced with a feeler member configured to crawl on the face 27; and
the detecting device 36 is eliminated and replaced with an optical detecting device, for example a camera, connected to the control unit 22 and configured to detect the profile of the face 27.

## Claims

1. A machine to cut panels (2) of wood or the like, the machine comprising support means (10) defining a support surface (P) for at least one panel (2) arranged in contact with the support surface (P) with its larger face (27); a cutting station (15); and a cutting unit (16), which is mounted in the cutting station (15) so as to move in a first direction (7) that is parallel to the support surface (P) and cut or incise the panel (2); the cutting unit (16) comprising at least one cutting member (23, 25) and at least one operating device (21) to move the cutting member (23, 25) from and to the support surface (P) in a second direction (6); and **characterized in that** it further comprises a detecting device (36) to detect a profile of said larger face (27) and an electronic control unit (22) to selectively control the operating device (21) and, therefore, the movement of the cutting member (23, 25) in the second direction (6) as a function of a signal coming from the detecting device (36).

2. A machine according to claim 1, wherein the detecting device (36) is mobile in the first direction (7).

3. A machine according to claim 1 or 2, wherein the detecting device (36) comprises optical detecting means.

4. A machine according to any of the previous claims, wherein the detecting device (36) comprises a feeler member (38) and actuator means (40) to move the feeler member (38) in the second direction (6) so as to cause it to come into contact and remain in contact with said larger face (27).

5. A machine according to claim 4, wherein each operating device (21) and the actuator means (40) are independent of one another so as to move the relative cutting member (23, 25) and the feeler member (38), respectively, in the second direction (6) with respective laws of motion that are independent of one another.

6. A machine according to claim 4 or 5, wherein the detecting device (36) further comprises measuring means (42, 43) to measure the position of the feeler member (38) in the second direction (6); the electronic control unit (22) being connected to the measuring means (42, 43) so as to selectively control the movement of the cutting member (23, 25) in the second direction (6) as a function of a signal coming from the measuring means (42, 43).

7. A machine according to any of the claims from 4 to 6, wherein the actuator means (40) comprise a pneumatic actuator cylinder.

8. A machine according to any of the previous claims, wherein each operating device (21) comprises an electric motor which is connected to the electronic control unit (22).

9. A machine according to any of the previous claims, wherein the cutting unit (16) comprises an incision blade (23), a first operating device (21) to move the incision blade (23) in the second direction (6), a cutting blade (25), and a second operating device (21) to move the cutting blade (25) in the second direction (6); the electronic control unit (22) being configured to selectively control the first operating device (21) and/or the second operating device (21) as a function of a signal coming from the detecting device (36).

10. A machine according to claim 9, wherein the detecting device (36) comprises a feeler member (38) and actuator means (40) to move the feeler member (38) in the second direction (6) so as to cause it to come into contact and remain in contact with the larger face (27) of the panel (2).

11. A machine according to claim 10, wherein the first operating device (21), the second operating device (21) and the actuator means (40) are independent of one another so as to move the incision blade (23), the cutting blade (25) and the feeler member (38), respectively, in the second direction (6) with respective laws of motion that are independent of one another.

12. A machine according to claim 10 or 11, wherein the support surface (P) has a cutting channel (28), which is slidingly engaged by the incision blade (23), by the cutting blade (25) and the by feeler member (38).

13. A machine according to any of the claims from 10 to 12, wherein the incision blade (23), the cutting blade (25) and the feeler member (38) are aligned in the first direction (7).

14. A machine according to any of the previous claims and further comprising at least one pusher (30, 31) to feed the panel (2) along the support surface (P) and through the cutting station (15) in a third direction (4) that is orthogonal to said first and second directions (7, 6).

15. A machine according to any of the previous claims, wherein the cutting unit (16) comprises a carriage (17) to move each cutting member (23, 25) and the detecting device (36) in the first direction (7).

16. A machine according to any of the previous claims, wherein the second direction (6) is perpendicular to the support surface (P).
